# EUROPEAN PATENT APPLICATION

(11) **EP 1 418 684 A2**
(43) Date of publication of application: **12.05.2004**
(21) Application number: 03025381.9
(22) Date of filing: 04.11.2003
(51) Int. Cl.: H04B 7/185

(54) **A mobile communication terminal device and a method of selecting a wireless communication link**

(30) Priority: 06.11.2002 JP 2002322541
(71) Applicant: Hitachi, Ltd., Chiyoda-ku, Tokyo 101-8010 (JP)
(72) Inventor: Maeda, Toshihide, Hitachi, Ltd., Int. Prop. Gp., Chiyoda-ku Tokyo 100-8220 (JP); Takahashi, Kazunori, Hitachi, Ltd., Int. Prop. Gp., Chiyoda-ku Tokyo 100-8220 (JP); Yanagihara, Norihisa Hitachi, Ltd., Int. Prop. Gp., Chiyoda-ku Tokyo 100-8220 (JP); Nonaka, Naomichi, Hitachi, Ltd., Int. Prop. Gp., Chiyoda-ku Tokyo 100-8220 (JP); Suzuki, Hideya, Hitachi, Ltd., Int. Prop. Gp., Chiyoda-ku Tokyo 100-8220 (JP); Noda, Tsutomu, Hitachi, Ltd., Int. Prop. Gp., Chiyoda-ku Tokyo 100-8220 (JP); Yamadera, Hitoshi, Hitachi, Ltd., Int. Prop. Gp., Chiyoda-ku Tokyo 100-8220 (JP)
(74) Representative: Strehl Schübel-Hopf & Partner

(57) **Abstract**

In a mobile communication using satellites, the present invention allows a mobile to receive a service wherever it is. To do so, when positioning the current location of a mobile (3) using a satellite (2) that sends the GPS signal, the mobile (3) receives an electric wave directly from the satellite (2) for performing positioning when the electric wave can be received directly from the satellite (2). On the other hand, when an electric wave cannot be received directly from the satellite (2), the mobile (3) receives an electric wave from a pseudo-satellite (4) or performs positioning using a wireless network (5) between other mobiles (3) and the mobile (3). Positioning may also be performed using an indoor wireless network (6).

## Description

### BACKGROUND OF THE INVENTION

The present invention relates to a technology for sending and receiving data seamlessly regardless of the location of a mobile.

Recently, a technology for mobile communication using a satellite is under development. Prior-art examples of such a technology include a positioning system (see, for example, JP-A-8-278360 (for example, paragraph numbers 0057 to 0064, FIG. 4)) that receives electric waves from a plurality of satellites, calculates a pseudo-range between each satellite and a mobile, and measures an absolute location (latitude and longitude) on the earth by making correction using correction data created on the basis of information from a fixed reference station; and a program providing system (see, for example, JP-A-11-34996 (for example, paragraph numbers 0132 to 0135, FIG. 18)) that broadcasts traffic jam information on roads by installing on a vehicle a terminal that can use a positioning system, satellite communications, and VICS (Vehicle Information and Communication System). Also proposed is a system (see, for example, JP-A-2002-64423 (for example, paragraph numbers 0017 to 0020, FIG. 1)) that sends a request from a mobile via a public network, such as a mobile phone network, through multimedia communications and receives information responsive to the request from a communication satellite.

However, a mobile does not always use the communication service in an environment where electric waves from satellites can be received. In the mobile communication described in the prior-art technology, the system is built in such a way that, though a part of information is received via ground waves, most information is received from satellites. Therefore, when a person receives information while moving with a mobile terminal, desired information cannot be received in a place where it is difficult for the mobile to receive electric waves, for example, in an underground shopping area or inside a building.

### SUMMARY OF THE INVENTION

In view of the problems described above, it is an object of the present invention to enable a person, who uses mobile communication via a satellite, to receive the service wherever the person carrying the mobile is.

A solution to the above problem is to receive data from at least one wireless communication link selected from a plurality of different wireless communication links. This allows a mobile to select a wireless communication link whose electric wave reception status is good, making it possible to provide services seamlessly wherever the mobile is. With this capability applied to a positioning system, a terminal device that has a chart area, in which a chart where positioning results are plotted is displayed, and an information source display area, in which the types of information sources receiving electric waves and the number of acquisitions are displayed, can recognize the wireless communication link that is being used. Because the display on which the positioning result is displayed does not vary according to the wireless communication link, there is no need for unwanted screen display switching and therefore the user finds the screen easy to view.

A method of selecting a wireless communication link is to give priority to information from a satellite or a pseudo-satellite, which provides most accurate location information, and then to make a search for the electric wave transmission source in order of fixed wireless relay stations and mobiles in order to increase positioning accuracy. When receiving an electric wave via relay unit such as a wireless relay station or a mobile, the distance to the relay unit is estimated and therefore, as the number of intervening relay unit increases, positioning accuracy may decrease. Thus, an electric wave (wireless communication link) may also be selected in such a way that the number of relay unit is decreased. The number of electric wave transmission sources (or received waves) applicable to the positioning system is three or four. A satellite and a pseudo-satellite may be treated as separate wireless communication links.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing the general configuration of a positioning system in an embodiment of the present invention.
FIG. 2 is a block diagram showing the configuration of a pseudo-satellite and the configuration of a mobile.
FIG. 3 is a diagram showing a wireless network.
FIGS. 4A and 4B are diagrams showing a wireless network.
FIG. 5 is a diagram showing an example of display on a mobile.
FIGS. 6A and 6B are diagrams showing an example of display on a mobile.
FIG. 7 is a flowchart showing the selection processing of location information sources.

### DETAILED DESCRIPTION OF THE EMBODIMENTS

An embodiment of the present invention will be described in detail with reference to the drawings.

This embodiment relates to a mobile communication system, for use when data cannot be sent and received directly between a mobile (also called a mobile station) and a satellite during mobile communication using a satellite, that sends and receives data seamlessly by using a fixed earth station installed within a building or other mobiles. A mobile used here refers to a notebook personal computer, a portable terminal device such as a PDA (Personal Digital Assistant), a vehicle-mounted audio unit, and a navigation system. A fixed earth station is a wireless base station or a pseudo-satellite that sends and receives data using wireless transmission technology and that acts as an access point of a mobile. A device such as a server, connected via a cable or radio waves to a wireless base station for executing particular data processing, may also be included in the fixed earth station. A satellite refers to a geostationary satellite or a non-geostationary satellite. For the non-geostationary satellite, a Highly Elliptical Orbit satellite (HEO), which is a quasi-zenith orbit satellite with a large elevation angle, or other non-geostationary satellites may also be used. A quasi-zenith orbit satellite is disclosed in detail in JP-A-11-34996 filed by the inventor of the present invention. The mobile and the fixed earth station described above are sometimes called a ground station as opposed to a satellite.

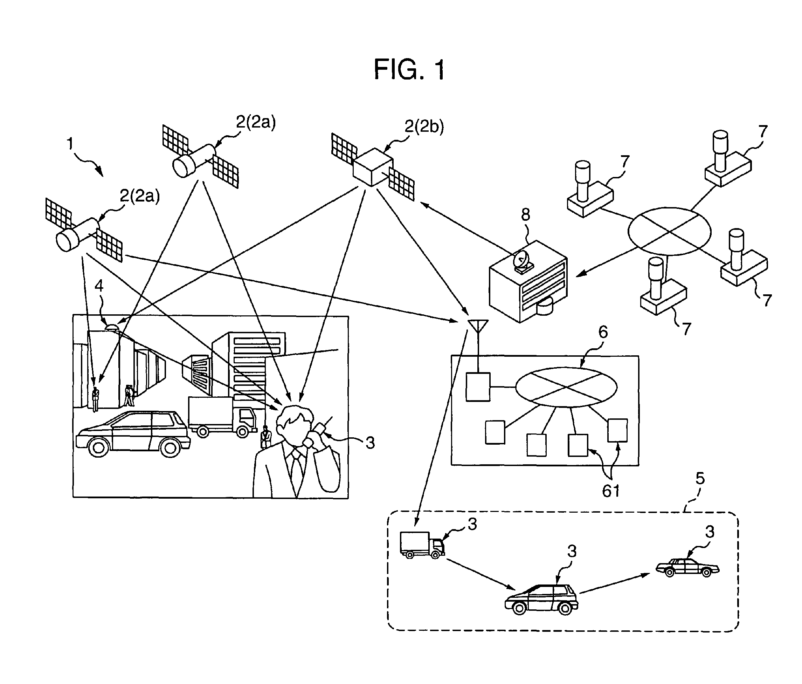

In such a mobile communication system, a satellite, a fixed earth station, and other mobiles are though of as an information origin (information source) when viewed from a mobile that receives the service. An example is broadcasting via a satellite and its relay broadcasting, the transmission and reception of mail by a mobile, and a telephone call. In the description below, a mobile communication system that sends and receives data seamlessly is described using a positioning system, such as the one shown in FIG. 1, as an example in which the positioning system performs positioning of a mobile.

When a positioning system 1 shown in FIG. 1 performs the positioning of the current location of a mobile 3 using a satellite 2 that sends GPS (Global Positioning System) signals, it receives an electric wave directly from the satellite 2 for performing positioning if the electric wave can be received directly from the satellite 2. On the other hand, if the electric wave cannot be received directly from the satellite 2 and if the mobile 3 is outdoors, positioning is performed by receiving the electric wave from a pseudo-satellite 4, a fixed earth station functioning as a pseudo-satellite, or by using an inter-mobile wireless network 5 to which other mobiles 3 are connected. If the mobile 3 is indoors, positioning is performed by using an indoor wireless network 6 that is built indoors. Details about how to switch electric waves received during this processing will be described in detail later.

The satellite 2 used in the positioning system 1 is a non-geostationary satellite generally called a GPS satellite. This satellite is configured to output the GPS signal (positioning information) composed of the pseudo random noise code signal, satellite orbit information, and time information. When the GPS signal is received from three satellites 2, the mobile 3 can calculate its current latitude and longitude. When the GPS signal is received from four satellites 2, the mobile 3 can also calculate the three-dimensional location including the height above the sea level. Any orbit of the satellite 2 may be used; when a quasi-zenith orbit satellite is used, there is an advantage that the mobile 3 can easily receive the signal (GPS signal) even in an urban area.

The GPS satellite (corresponds to satellite 2a) uses a circular orbit with an orbit inclination of 55 degrees and an orbital period of 12 hours (the orbital period is 1/2 synchronous to the revolution of the earth). In a place where the latitude is 55 degrees or lower, the maximum elevation angle is 90 degrees but the orbital period is 12 hours. Therefore, the time during which the satellite is viewed at an elevation angle higher than that of the quasi-zenith orbit satellite (corresponds to satellite 2b; details will be described later) is shorter. The GPS satellite is a satellite or a satellite group that goes around an orbit with the height of 19,000-25,000Km (so-called MEO orbit) for broadcasting positioning signals to mobiles and a satellite or a satellite group that goes around a stationary orbit for broadcasting positioning signals to mobiles. For example, the GPS satellite includes GPS/NAVSTAR (Global Positioning System/NAVigation Satellite Timing and Ranging), GLONASS (Global Navigation Satellite System), Galileo (Europe's global navigation system), and a multipurpose transport satellite. Because a satellite or a satellite group that goes around the MEO orbit with the height of 19,000-25,000Km for broadcasting positioning signals to mobiles uses the MEO, the satellite elevation angles below 90 degrees are distributed widely in Japan but the time during which the satellite is viewed at a high elevation angle is shorter than that of a quasi-zenith orbit satellite. For a satellite or a satellite group that uses a stationary orbit for broadcasting positioning signals to mobiles, the elevation angle in Japan depends on the location, with the maximum being about 50 degrees (in Tokyo), but does not depend on the time.

On the other hand, a satellite whose orbital period is 24 hours (or whose orbital period is synchronous with the revolution of the earth) and which is viewed at a high elevation angle for a long period of time in Japan (including a highly elliptic orbit satellite and an eight figure satellite) is generally called a quasi-zenith orbit satellite. For example, when an HEO (Highly Elliptic Orbit) is included and the constellation is composed of three satellites, an orbit that allows an in-operation satellite to be always viewed at an elevation angle of about 70 degrees or higher in four Japan main lands and Okinawa is supposed. Considering the end of Japan (northernmost, etc.), the lowest elevation angle of the in-operation satellite is about 65 degrees. The quasi-zenith orbit satellite may also be a so-called eight figure satellite. In this case, when the constellation is composed of three satellites, an orbit that allows an in-operation satellite to be always viewed at an elevation angle of about 60 degrees or higher in four Japan main lands and Okinawa is supposed. Similarly, considering the end of Japan (northernmost, etc.), the lowest elevation angle of the in-operation satellite is about 50 degrees. For positioning signal types, two types of signals are assumed: one is a signal similar to the GPS signal and the other is the D-GSP signal.

Therefore, when the service area includes the four Japan main lands and Okinawa, a quasi-zenith orbit satellite unit a satellite group that allows three (or four) satellites to be viewed, one after another, in the sky above a location near the service area, preferably, at the elevation angle of 70 degrees or higher or at least about 50 degrees or higher (45 degrees or higher) for 24 hours (First, the first satellite 2b can be viewed in the sky above a location near the service area and, when the first satellite 2b leaves the sky above the service area, the second satellite 2b can be viewed in the sky above a location near the service area; when the second satellite 2b leaves the sky above the service area, the third satellite 2b can be viewed in the sky above a location near the service area; when the third satellite 2b leaves the sky above the service area, the first satellite 2b can be viewed again in the sky above a location near the service area. The same sequence is performed when the group is composed of four satellites).

To increase the location accuracy by removing an error generated when an electric wave passes through the ionosphere, this embodiment uses differential GPS (D-GPS) in which the GPS signal is corrected by correction data (differential data). Correction data can be obtained by calculating the location of an electronic reference station 7 using the GPS signal from the satellite 2a and by calculating an error between the positioning result and the actual location of the electronic reference station 7 using a correction data calculation unit 8. Correction data, which may be sent to the mobile 3 using the ground wave such as an FM wave, can also be sent from the satellite 2b in the multiplex broadcasting mode as shown in FIG. 1. An effect achieved by using the satellite wave as described above is that an area broader than that covered by the ground wave can be covered. Using the quasi-zenith orbit satellite 2a described above as the satellite 2b further increases the coverage rate. The satellite 2a that sends the GPS signal and the satellite 2b that sends correction data may be the same satellite 2 or separate satellites 2.

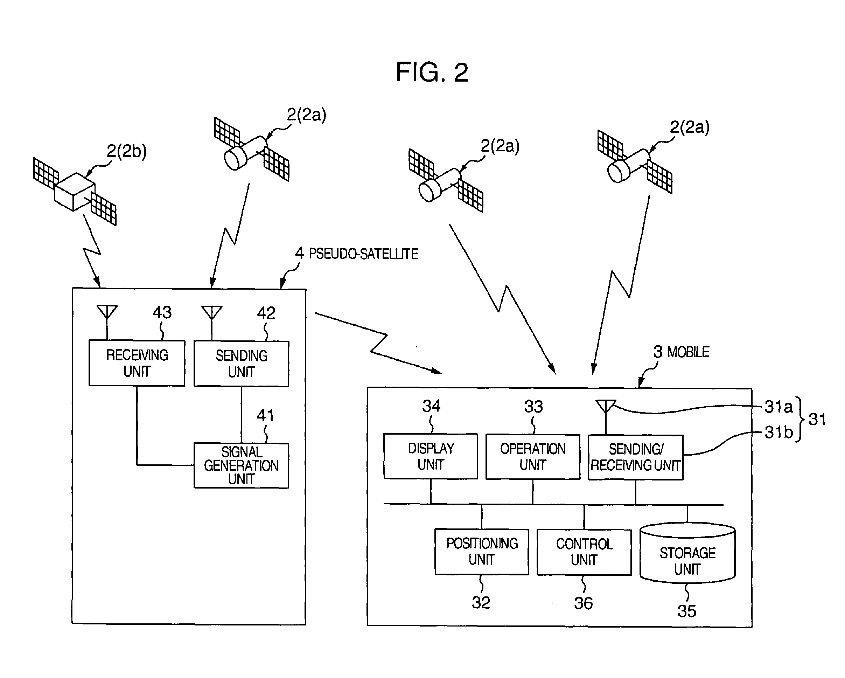

The pseudo-satellite 4 is a fixed earth station installed outdoors that, in an environment such as an urban area where it is difficult to receive an electric wave from the satellite 2, behaves as if there was a satellite 2 and sends an electric wave similar to that of the satellite 2. This pseudo-satellite 4 comprises signal generation unit 41 composed of a CPU, a clock, and so on and sending unit 42 as shown in FIG. 2. This signal generation unit 41 generates a pseudo satellite signal conforming to the format of the GPS signal. This pseudo satellite signal includes at least the identification code of the pseudo-satellite 4, location information, and electric wave transmission time. This embodiment also comprises receiving unit 43 that receives information or correction data for correcting the location or the time of the pseudo-satellite 4 from the satellite 2b. As correction data extraction processing, the signal generation unit 41 extracts correction data at the location of the pseudo-satellite 4.

As shown in the block diagram in FIG. 2, the mobile 3 is a terminal device comprising sending/receiving unit 31 composed of an antenna 31a and a sending/receiving unit 31b for sending and receiving an electric wave; positioning unit 32 for performing the positioning of its location based on a received electric wave; an operation unit 33 that accepts user operation; a display unit 34 on which an operation result and so on are displayed; storage unit 35 in which predetermined information or applications are stored; and control unit or controller 36 for controlling the whole device. Although one antenna 31a and one sending/receiving unit 31b composed of an RF (Radio Frequency), filter, an A/D (Analog/Digital) converter, a D/A (Digital/Analog) converter, and so on are shown in FIG. 2, the antenna and the sending/receiving unit may be provided each for the satellite 2, pseudo-satellite 4, the communication among mobiles, and the indoor wireless network 6. When the GPS satellite (corresponds to satellite 2a) and the quasi-zenith orbit satellite 2b are used as the satellite 2, more antennas and sending/receiving units may also be used.

Positioning processing performed by such a mobile 3 will be described briefly below.

In this embodiment, one of the methods given below or a combination of them are used to calculate a plurality of pseudo-ranges (three or more) and then to calculate a location with the minimum of the absolute values of difference between the locations obtained from them. (1) The GPS signal and correction data sent from the satellite 2, whose location can be specified, are received to calculate the pseudo-range. (2) The pseudo satellite signal and correction data are received from the pseudo-satellite 4 to calculate the pseudo-range between the mobile 3 and the pseudo-satellite 4 using the location of the pseudo-satellite 4 and the correction data. (3) The relative location of the mobile 3 from an access point (wireless base station 61), which can position its location by receiving the GPS signal or the pseudo satellite signal and correction data and which is the electric wave transmission source of the indoor wireless network 6, or from another mobile 3 is estimated to determine the pseudo-range between the mobile and the access point or the other mobile.

When the pseudo-range to the satellite 2 is calculated as described in (1) above, the sending/receiving unit 31 of the mobile 3 receives the electric wave, removes components outside the electric wave reception bandwidth, and digitizes the electric wave (In the GPS communication system in which the spread spectrum method is used, the signal is mixed with a noise and, if the noise in the bandwidth is removed, the signal cannot be detected. Therefore, a noise outside the bandwidth is removed and the signal is digitized). The sending/receiving unit 31 converts the electric wave to the signal, detects the identification code (or pseudo random noise code signal), electric wave transmission time information, and information for calculating the location of the satellite 2, which are included in the electric wave, and sends the information to positioning unit 32. The positioning unit 32 calculates the location of the satellite 2 based on the information for calculating the location of the satellite 2 and calculates the pseudo-range (apparent wave transmission time x speed of light) from the satellite 2 based on the orbit information on the satellite 2 and the electric wave transmission time information.

When the pseudo-range to the pseudo-satellite 4 is calculated as described in (2) above, the sending/receiving unit 31 detects the identification code of the pseudo-satellite 4 (or the identification of the pseudo-satellite 4 may be represented by the pseudo random noise code), electric wave transmission time information, and location information on the pseudo-satellite 4 (pseudo satellite signal) and sends them to the positioning unit 32. The positioning unit 32 calculates the pseudo-range from the pseudo-satellite 4 based on the identification code of the pseudo-satellite 4, location information, and electric wave transmission time information.

When the pseudo-range to the wireless base station 61 of the indoor wireless network 6 is calculated as described in (3) above, the pseudo-range is calculated from the location information on the wireless base station 61 and the electric wave transmission time information. For the location information on the wireless base station 61, either the location information measured in advance and stored in the memory of the wireless base station 61 or the location information calculated based on the GPS signal received from the satellite 2 is used. In this case, it is also possible that the location of at least one wireless base station 61 is stored in memory or is calculated and the locations of other wireless base stations 61 are calculated based on the stored or calculated location. When the pseudo-range to some other mobile 3 is calculated using the wireless network 5 among mobiles, the pseudo-range is calculated from the location information on the other mobile 3 and the electric wave transmission time information. For the location information on the other mobile 3, the location information obtained as a result of positioning processing of the mobile 3 using one of the satellite 2, pseudo-satellite 4, and wireless base station 61 is used.

Because the indoor wireless network 6 may be thought of as an infrastructure type network using a wired network infrastructure within a building, positioning using such a network is considered as positioning using an infrastructure type network. From this viewpoint, it is apparent that the wireless base station 61 need not be installed indoors. Positioning using the wireless network 5 among mobiles is considered as positioning using a wireless adhoc network (multi-hopping wireless network) that is a temporary network built by a peer-to-peer connection among mobiles 3. The two networks described above can be implemented, for example, by installing a communication control unit, which conforms to the standard IEEE802.11 for performing data communication, on the mobile 3.

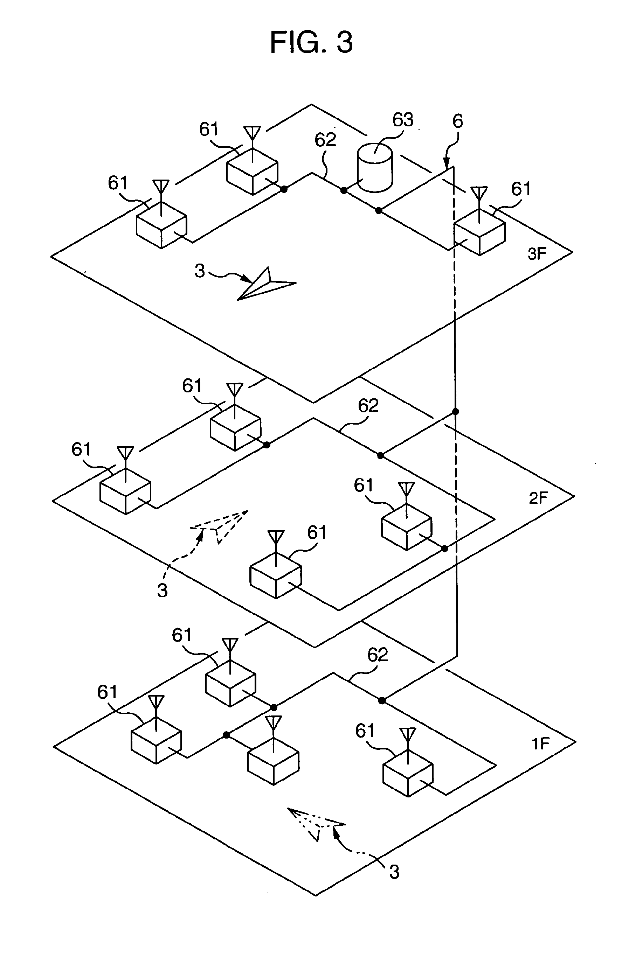

Positioning using the indoor wireless network 6 will be further described with reference to FIG. 3. FIG. 3 shows the indoor wireless network 6 built within a three-story building. The network comprises a plurality of wireless base stations 61 installed on each floor according to the structure, communication lines 62 connecting the wireless base stations 61, and a computer server 63 (hereinafter called a server). The wireless base station 61 comprises sending/receiving unit for sending and receiving data-superposed electric waves within a predetermined range and communication control unit for sending and receiving data to or from the server 63 or other wireless base stations 61 using a wired network and is controlled by the control unit comprising a CPU, clock, and so on.

The location of each wireless base station 61 is identified by measuring it in advance or by calculating the pseudo-range from a fixed earth station (not shown) that can receive the GPS signal. The pseudo-range between a fixed earth station and a wireless base station is calculated by providing each wireless base station 61 with positioning unit or by providing the server 63 with positioning unit that notifies each wireless base station 61 of the positioning result.

The mobile 3, represented as a schematic triangle in FIG. 3, is now on the third floor and uses the wireless base station 61 on the third floor for positioning. Normally, the area covered by the wireless base station 61 does not extend to other floors; therefore, for example, when the wireless base station 61 installed on the third floor is used, not only the latitude and the longitude but also the fact that the mobile 3 is on the third floor is known. When the mobile 3 moves to the second floor as shown by the dotted line in the figure, positioning is performed by using the wireless base station 61 on the second floor and the fact that the mobile 3 is on the second floor is known immediately. When the mobile 3 moves to the first floor as shown by the chain double-dashed line in the figure, positioning is performed by using the wireless base station 61 on the first floor. Thus, if the electric wave can be received from the three wireless base stations 61, the latitude and longitude of the mobile 3 and the floor on which the mobile 3 is present are known.

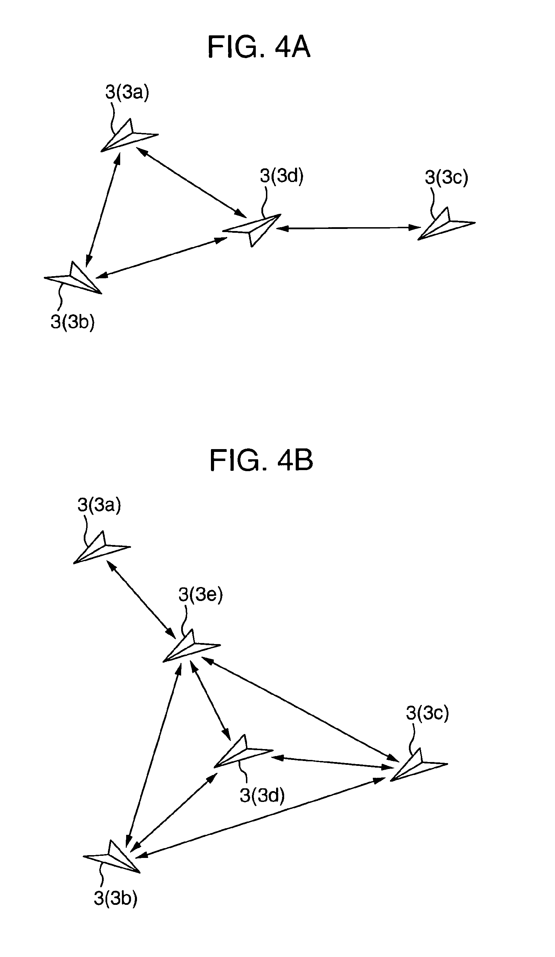

The following describes positioning using the wireless network 5 among mobiles. Such a network is a local wireless network including mobiles in a one-to-many configuration. Using this network makes it possible to receive an electric wave from the satellite 2, pseudo-satellite 4, or wireless base station 61 even at a location where no electric wave can be received. For example, as shown in FIG. 4A, when there are three mobiles, 3a, 3b, and 3c, that can receive the GPS signal (or pseudo satellite signal in some cases) and correction data to specify their locations and one mobile, 3d, that cannot directly receive the GPS signal and so on but wants to specify its location, the mobile 3d receives the electric waves output from the mobiles 3a, 3b, and 3c that can specify their locations and, from the intensity of the electric waves at that time, estimates the distance among the mobiles. In this case, by obtaining information also on the locations of the mobiles 3a, 3b, and 3c, the location of the mobile 3d is estimated from the locations of the mobiles 3a, 3b, and 3c and the distance among them.

When the mobile 3d can receive electric waves from two mobiles, 3b and 3c, which can receive the GPS signal, but cannot receive electric waves directly from other mobiles that can receive the GPS signal as shown in FIG. 4B, information necessary for positioning becomes insufficient. In this case, the location is identified from the mobile 3b and the mobile 3c using the mobile 3e that cannot receive the GPS signal but can specify the location using other mobiles (for example, mobiles 3a, 3b, and 3c). This processing is the same as that described using FIG. 4A. However, because the location is estimated using the mobile 3e whose location is determined through estimation, an error may be generated more frequently than when the location is estimated only from the mobiles 3a, 3b, and 3c that can receive the GPS signal. In this case, because positioning is performed for the mobile 3d using the mobile 3a, for which positioning is performed by the electric wave of the satellite 2, via the mobile 3e, that is, because there are two relay unit between the satellite 2 and the mobile 3d, the hop count becomes two. If this hop count is counted by the mobile 3d, the electric wave selection, which will be described later, becomes possible.

Next, the details about the operation unit 33 and the display unit 34 of the mobile 3 will be described using an example.

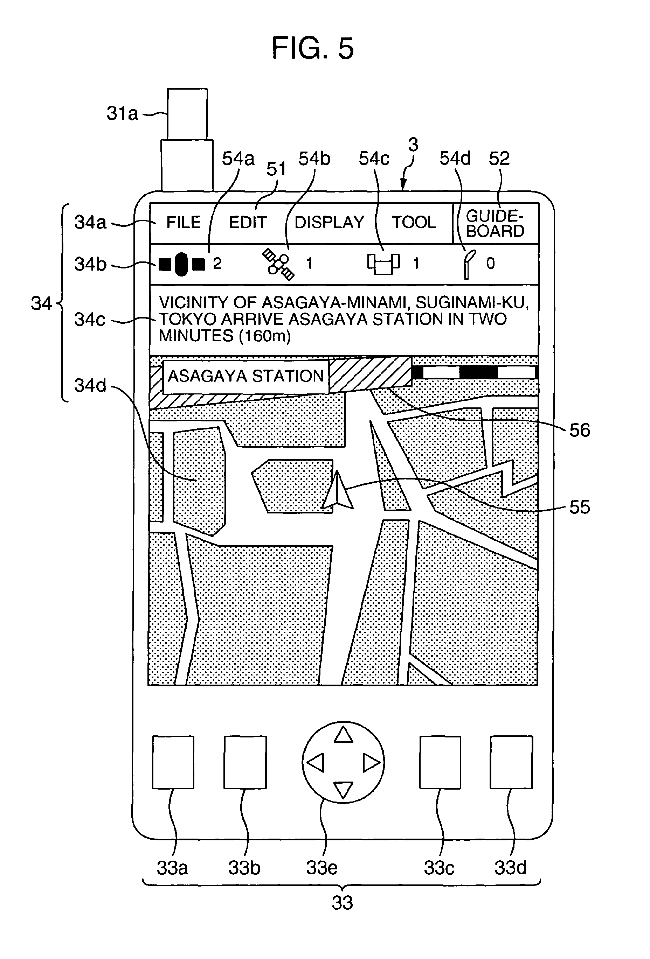

Referring to FIG. 5, the operation unit 33 comprises a plurality of buttons 33a, 33b, 33c, and 33d provided at the bottom of the mobile 3 and a four-direction key 33e that moves a map or a cursor displayed on the display unit 34 in one of four directions: up, down, right, and left. The four-direction key 33e is provided approximately in the center in the crosswise direction with two buttons on each side of that key; power button 33a and cancel button 33b, and tool button 33c for selecting convenient tools prepared for applications and menu button 33d. It is also possible to provide buttons on the side or at the top of the mobile 3 or to provide rotary selection unit. It is also possible to use the screen of the display unit 34 as a touch panel to combine the display unit 34 with the operation unit 33.

The display unit 34 is implemented by a liquid crystal screen provided in the area above the operation unit 33. In FIG. 5, information on a route to Asagaya station is displayed on a map, as well as information on the current location, as an example of outdoor information. In this figure, the display unit 34 can be displayed into four areas described below.

In a first area 34a provided at the top, an operation menu 51 of an application currently processing information displayed on the screen and a switching menu 52 used for switching between a plurality of applications are displayed.

In a second area 34b below the bottom of the first area 34a, the location information sources, each of which indicates the type of electric wave transmission source used for performing the positioning of the mobile 3 and the number of electric wave acquisitions from that location information source are displayed (this area is used as an information source display area). In FIG. 5, the GPS satellite, quasi-zenith orbit satellite, wireless base station 61, and pseudo-satellite 4 are indicated as location information sources using a schematic diagram 54a, a schematic diagram 54b, a schematic diagram 54c, and a schematic diagram 54d with the number of electric wave acquisitions indicated next to each schematic diagram as a numeral. That is, it is indicated that this mobile 3 performs positioning using electric waves from a total of four sources, that is, two GPS satellites, one quasi-zenith satellite, and one wireless base station 61 (zero pseudo-satellite 4). The location information sources are sequenced from left to right in the second area 34b in descending order of the number of acquisitions. The location information source with the largest number of acquisitions is highlighted. A schematic diagram indicating inter-mobile communication may also be added as the location information source.

A third area 34c, where information on the current location and the destination is displayed, is displayed below the second area 34b. In FIG. 5, the current location, destination, time required to reach the destination, and distance are displayed as text information.

A fourth area 34d, the largest area at the bottom, is an area (chart display area) in which a map and a route are displayed with the current location. In FIG. 5, information is displayed such that a display 55 indicating the current position points to the top of the mobile 3, or such that the moving direction is toward the top of the mobile 3. The map, though shown as a two-dimensional map, may also be displayed as a three-dimensional map, from bottom to top of the display unit 34 of the mobile 3, using the law of perspective. The map may be stored in the storage unit 35 (see FIG. 2) of the mobile 3 in advance or the map of the current location may be downloaded using a wireless communication link used for positioning (satellite communication, wireless base station, or wireless communication among mobiles).

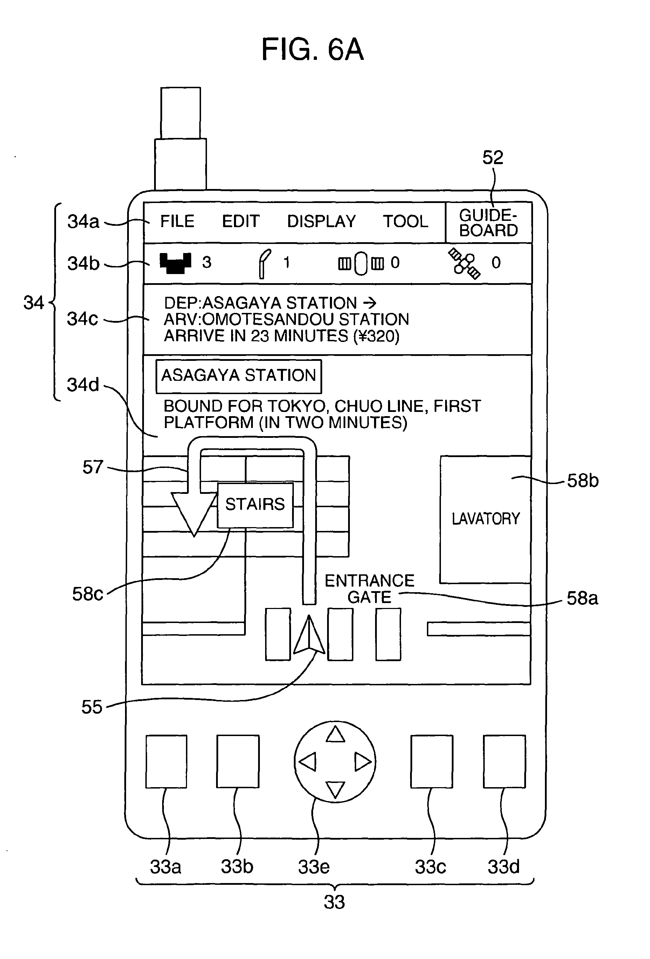

FIG. 6A is an example of the display unit 34 on which the guideboard of a station yard is displayed as an example the display of a guideboard for use when a person walks in a building. The switching menu 52 of the application in the first area 34a indicates that the guideboard application has been started. The second area 34b indicates that positioning is being performed from three wireless base stations 61 and one pseudo-satellite 4. The third area 34c indicates that the departure location (current location) and the arrival location (destination) in a simple format such as "DEP:Asagaya **→** ARV:Omotesandou". Because the route uses transportation unit requiring a fare, the expected time required to arrive and the fare are also displayed. In the fourth area 34d, a schematic diagram of the station yard, the display 55 indicating the current location, and an arrow 57 indicating a suggested route are displayed. This figure shows an example in which the stairs are used and therefore, when the user moves to another floor, the display switches to the display of the floor to which the user has moved. When a platform of a station is displayed, information on where to take a train is also displayed. Display items 58a, 58b, and 58c indicating "entrance gate", "lavatory", and "stairs" are added to this figure to help the user understand the map. Such displays work also as the guidance information on the facilities the user may use.

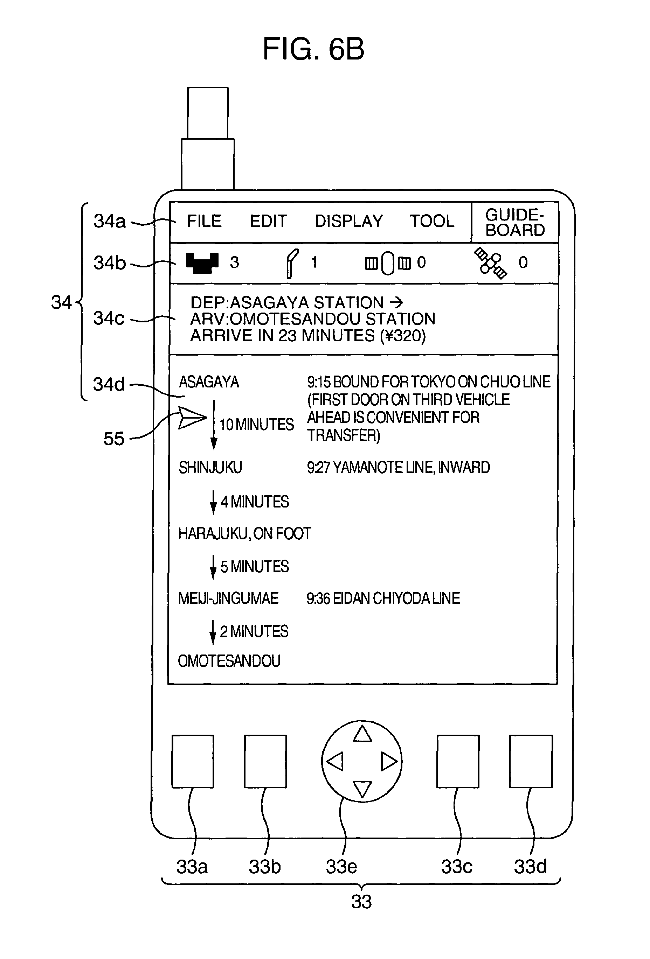

FIG. 6B shows an example of guidance information, which is displayed while moving by train, as an example of a guideboard that is displayed while moving by transportation facilities. In the fourth area 34d, not the figure but a table containing a list of the departure station, interchange station, and destination station, which are arranged in sequence, is displayed with the required time, estimated arrival time, connection line name, and transfer method (on foot). The present-location display 55 is displayed horizontally and moves from top to bottom as the user moves. Displaying the present-location display 55 in the same format produces the effect that the user can identify his or her location easily.

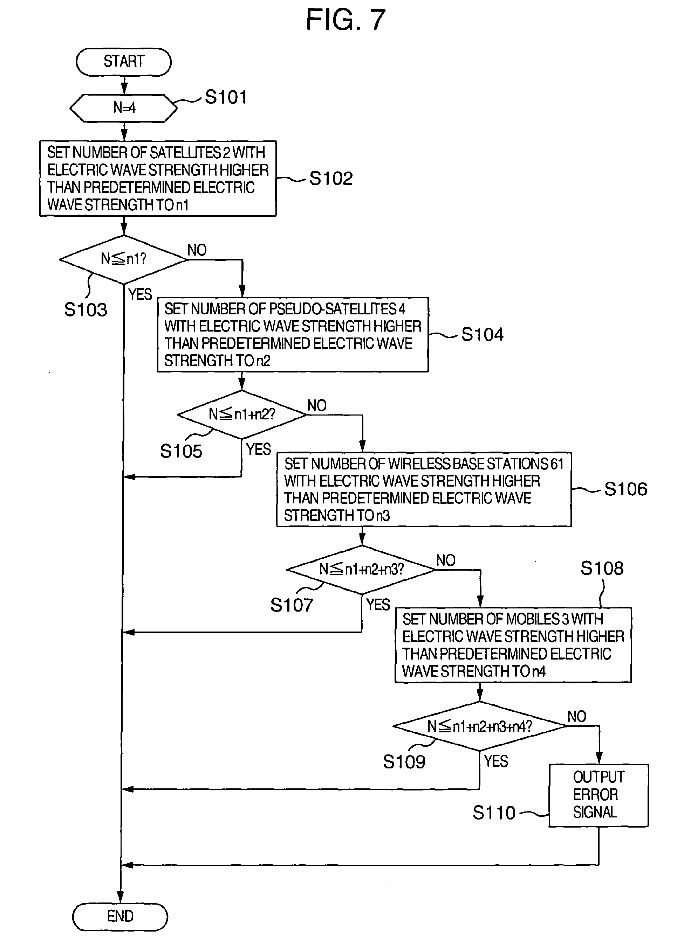

To display the screen by performing positioning using a plurality of types of location information sources in this embodiment as described above, it is necessary to control the switching of location information sources to be used. For example, although positioning is performed mainly by the satellite 2 in the example shown in FIG. 5 because the user is outdoors, positioning is performed mainly by the wireless base station 61 or via inter-mobile communication in the example in FIG. 6A and FIG. 6B because the user enters a building and it is difficult to receive an electric wave from the satellite 2. Conversely, when the user moves from indoors to outdoors, reverse switching is required. With reference to FIG. 7, the following describes how to select a location information source, or a wireless communication link.

FIG. 7 shows location information source selection processing with emphasis on the electric wave strength.

First, in step S101, the number of required location information sources, N, is set to 4. When only the latitude and the longitude, but not the height, are considered, the number of location information sources, N, may be set to 3.

In step S102, the sending/receiving unit 31 checks the electric wave strength of the satellite 2 in response to an instruction from control unit 36 in FIG. 2 and stores the number of satellites 2, which have an electric wave strength higher than a predetermined electric wave strength, as n1. In step S103, if the number of satellites 2, n1, is equal to or larger than the required number of location information sources, N, processing is terminated and the positioning unit 32 performs positioning using the electric wave from the satellites 2. When the quasi-zenith orbit satellite and the GPS satellite are distinguished, step S102 and step S103 are executed for each of the satellites 2.

If the electric wave only from the satellites 2 is insufficient for the number of location information sources, N, (No in step S103), control is passed to step S104. In response to an instruction from the control unit 36, the sending/receiving unit 31 checks the electric wave strength of the pseudo-satellites 4 and stores the number of pseudo-satellites 4, which has electric wave strength higher than predetermined electric wave strength, as n2. In step S105, if the sum of the number of satellites 2, n1, and the number of pseudo-satellites 4, n2, is equal to or larger than the number of required location information sources, N, processing is terminated and the positioning unit 32 performs positioning using the electric wave only from the pseudo-satellites 4 or from the pseudo-satellites 4 and the satellites 2.

If the number of location information sources, N, is insufficient even when the pseudo-satellites 4 are considered (No in step S105), control is passed to step S106. In response to an instruction from the control unit 36, the sending/receiving unit 31 checks the electric wave strength of the wireless base stations 61 and stores the number of wireless base stations 61, which has electric wave strength higher than predetermined electric wave strength, as n3. In step S107, if the sum of the number of satellites 2, n1, the number of pseudo-satellites 4, n2, and the number of wireless base stations 61, n3, is equal to or larger than the number of required location information sources, N, processing is terminated and the positioning unit 32 performs positioning using the location information sources including at least one wireless base station 61.

If the number of location information sources, N, is insufficient even when the wireless base stations 61 are considered (No in step S107), control is passed to step S108. The sending/receiving unit 31 checks the electric wave strength of other mobiles 3 whose location can be specified and stores the number of mobiles 3, which has electric wave strength higher than predetermined electric wave strength, as n4. In step S109, if the sum of the number of satellites 2, n1, the number of pseudo-satellites 4, n2, the number of wireless base stations 61, n3, and the number of other mobiles 3, n4, is equal to or larger than the number of required location information sources, N, processing is terminated and the positioning unit 32 performs positioning using the location information sources including at least one mobile 3. On the other hand, if the number of required location information sources, N, is insufficient even after processing in step S109, the error signal is generated in step S110 and processing is terminated. In this case, a message such as "Electric wave not received" is displayed on the display unit 34 to notify the user that positioning cannot be performed.

The processing sequence described above indicates an example in which the highest priority is given to the satellite 2 that has the highest accuracy among location information sources and that the next highest priority is given to the pseudo-satellite 4 that has the next highest accuracy or that can attain accuracy at an equivalent level. That is, among the location information sources having equal electric wave strength, a location information source with a higher priority is used and positioning is performed using a wireless communication link to or from such a location information source. For example, when the user is outdoors, positioning is performed with priority on the satellites 2 and the pseudo-satellites 4 are used as an auxiliary source. If the electric wave from the pseudo-satellites 4 is insufficient, positioning is performed using inter-mobile communication (wireless adhoc network). Of course, the electric wave from the wireless base stations 61 normally installed indoors, if received, may be used. On the other hand, because it is difficult indoors to receive the electric wave from the satellites 2 or the pseudo-satellites 4, positioning is performed primarily via the wireless base stations 61 or inter-mobile communication. When the user moved from indoors to outdoors or from outdoors to indoors, the electric wave strength is checked while the user moves and, while placing higher priority on the satellites 2, a location information source having higher electric wave strength is used. Note that the present invention is not limited to the priority shown the flowchart in FIG. 7.

Instead of selecting a location information source according to the priority described above, another example of selecting a location information source, or a wireless communication link, is to add weight to a location information source according to the type and the arrangement. That is, when the satellite 2 which has the highest accuracy and from which the electric wave is received directly is used as the location information source, the lowest weight (for example, hop count = 0) is given and, as the number of relay unit between the satellite 2 and the mobile 3 increases, the weight is increased (for example, hop count = No. of relay unit is used as the weight). Positioning is performed using three or four lowest-weight electric waves to receive the electric wave from the location information sources generating such electric waves. If the electric wave can be received from all location information sources, the weight can be reduced when only the satellite 2 is used. When the mobile 3 receives the electric wave from the wireless base station 61 whose hop count is 4 and the electric wave from the mobile 3 whose hop count is 2, the mobile 3 whose hop count is lower is used as the location information source. Such a selection method may also be used to select the electric wave to be used for positioning when a plurality of electric waves are received from the same location information source in the selection method described in FIG. 7.

It is also possible that the user selects a location information source by operating an application through the operation of the operation unit 33. This operation allows the user to reflect his or her intention; for example, the wireless base station 61 should be used more frequently than the satellite 2 or mobile 3 when the user is indoors or should use the wireless base station 61 outdoors.

In those cases, because the control unit 36, which also functions as unit for controlling the display unit 34, causes positioning results to be superimposed on map data, the display on the display unit 34 remains the same regardless of the type of a location information source. Thus, even when the location information source is switched or when the wireless communication link is changed for the same location information source, the screen or the scaling of the map is not changed and therefore the user need not worry about a change in the location information source or wireless communication link. By referring to the second area 34b, the user can confirm the location information source being used. When taking the hop count into consideration, it is desirable for the mobile 3 and the wireless base station 61 to send its hop count, as well as the location information or time information, to the mobile 3 that requires positioning. When the mobile 3 receives such a electric wave, the control unit 36 obtains the hop count and compares it with the hop count of other wireless communication link. When sending an electric wave, it is desirable for the control unit 36 to generate a value by incrementing the hop count of the wireless communication link used for positioning by one and to send that value.

As described above, this embodiment directly or indirectly transmits information from the satellite 2 to allow the mobile 3 to perform positioning regardless of where it is. In addition, even when information is transmitted indirectly, the mobile 3 can position its location by estimating the distance from an access point, an electric wave transmission source whose absolute position is known based on information from the satellite 2, via other mobiles 3 or a wireless network environment. Therefore, this configuration eliminates the need for installing a new, dedicated infrastructure and reduces the cost required to build a system. Even when the information transmission route (location information source) is switched, the user can use the mobile worrying about such a change on the screen of the mobile 3. This makes it possible to identify the current location even in a large shop such as a shopping center or in a building with a complicated internal structure such as a museum or an exhibition hall, thus allowing the user to reach the destination quickly. In addition, the mobile can be used to find a seat reserved for the user in a concert hall or to confirm an entrance nearest to the user's seat. In this case, information is not disrupted by automatically switching the information transmission path even in an environment where the user easily loses the current location or the destination, for example, when the user moves from indoors to outdoors or vice versa. In addition, by using the mobile as mobile phones of fire fighters, the activity of fire fighters in a building where a fire has started can be supported from a fire engine.

The present invention is not limited to the embodiment described above but may be applied to a wide range.

For example, it is possible to use a wireless network in a museum or an exhibition hall to send information on an exhibit so that, when the mobile 3 approaches the exhibit, the user can browse information on the exhibit.

It is also possible to send multimedia contents, such as music or video, in conjunction with location information or singly. In this case, multimedia contents may be received directly from the satellite 2 when the user is outdoors, and via a wireless network in an environment where an electric wave cannot be received directly from the satellite 2.

When an infrastructure type network described above is used, the location of the mobile 3 can be positioned even when the mobile 3 does not have the positioning unit 32. In this case, the wireless base stations 61 use a clock included therein to know the time at which data is received and the server 63 measures the location of the mobile 3 from the differences in time at which the wireless base stations 61 receive data from the mobile 3 and sends the measured result to the mobile 3. The clocks of the wireless base stations 61 may be synchronized in advance or corrected so that they are synchronized. An example of correction method is as follows. A particular wireless base station 61 sends a packet, to which a transmission time is added as a timestamp, to another wireless base station 61. The wireless base station 61 that has received this packet compares the time, calculated by subtracting the time required for packet transmission (for example, when directly connected via an optical fiber, the quotient produced by dividing the distance of the transmission path by the speed of light) from the reception time measured by the clock of the wireless base station 61 that has received the packet, with the transmission time attached to the data and corrects the time to eliminate the difference.

As described above, by transmitting information directly from a satellite or by transmitting information indirectly via a wireless network environment, a mobile can receive the service wherever it is. When this mechanism is applied to a positioning system, a mobile can position its location wherever it is.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A mobile communication terminal device (3) comprising a positioning means (32) that performs positioning by receiving three or more electric waves output from a plurality of types of information sources; a display (34) on which the positioning result is displayed; and a means (36) for controlling the display, wherein, on said display (34), a chart indicating the positioning result is displayed, the types of information sources from which the electric waves are received are displayed, and a number of electric waves received from the information sources are displayed.

2. The mobile communication terminal device (3) according to claim 1 wherein, when the type of information source is switched, said means (36) for controlling the display controls the display in such a way that the positioning result after switching is displayed as the chart before switching.

3. A method of selecting a wireless communication link for mobile communication wherein a service is received using a first wireless communication link that receives an electric wave from a satellite (2) or from a fixed earth station (4) that sends an electric wave similar to the electric wave from the satellite (2), a second wireless communication link that receives an electric wave from a wireless base station (61), and a third wireless communication link that receives an electric wave from a mobile, said method comprising the steps of:
checking a number of electric wave transmission sources from which the electric waves are received in order of said first wireless communication link, said second wireless communication link, and said third wireless communication link until a number of electric wave transmission sources necessary for receiving the service is reached; and
receiving the service from the electric wave transmission sources.

4. The method of selecting a wireless communication link for mobile communication according to claim 3 wherein said number of electric wave transmission sources is three or four and said service is a positioning service that calculates and displays a position of a mobile.

5. A method of selecting a wireless communication link for mobile communication wherein a location of a mobile is specified based on an electric wave received from a satellite directly or via at least one relay means, said method comprising the steps of:
selecting the wireless communication link in such a way that a number of intervening relay means is reduced; and
performing positioning based on selected three, four, or more electric waves.
